# EUROPEAN PATENT APPLICATION

(11) **EP 2 811 361 A1**
(43) Date of publication of application: **10.12.2014**
(21) Application number: 13170590.7
(22) Date of filing: 05.06.2013
(51) Int. Cl.: G06F 1/16, G06F 1/32

(54) **Method and apparatus for interaction mode determination**

(71) Applicant: Nokia Corporation, 02610 Espoo (FI)
(72) Inventor: Jansky, Martin, 02620 Espoo (FI); Viljamaa, Timo-Pekka Olavi, 00530 Helsinki (FI); Anttila, Erkko Juhana, 02230 Espoo (FI); Korhonen, Jokko, 00180 Helsinki (FI)
(74) Representative: Swindell & Pearson Limited

(57) **Abstract**

A method comprising causing display of content information on an apparatus, determining that at least one reduced interaction criteria has been satisfied to enter a reduced interaction mode, determining that a hand is gripping the apparatus in a manner that is consistent with a use grip, and causing display of, at least part of, the content information based, at least in part, on the determination that the hand is gripping the apparatus in a manner that is consistent with the use grip is disclosed.

## Description

### TECHNICAL FIELD

The present application relates generally to interaction mode determination.

### BACKGROUND

As electronic apparatuses have expanded their capabilities, as well as the number and types of operations they perform, interaction has become increasingly complex and time consuming. For example, apparatus interaction may be prone to errors, confusion, and delay. In some circumstances, a user may miss an opportunity to do something, such as capture an image of an event, due to delays associated with interaction. In other circumstances, a user may avoid utilizing an apparatus capability due to a desire to avoid errors, confusion, or delay. Under such circumstances, it may be desirable for a user to be able to interact with the electronic apparatus in a simple, quick, and intuitive manner.

### SUMMARY

Various aspects of examples of the invention are set out in the claims.

One or more embodiments may provide an apparatus, a computer readable medium, a non-transitory computer readable medium, a computer program product, and a method for causing display of content information on an apparatus, determining that at least one reduced interaction criteria has been satisfied to enter a reduced interaction mode determining that a hand is gripping the apparatus in a manner that is consistent with a use grip and causing display of, at least part of, the content information based, at least in part, on the determination that the hand is gripping the apparatus in a manner that is consistent with the use grip.

One or more embodiments may provide an apparatus, a computer readable medium, a computer program product, and a non-transitory computer readable medium having means for causing display of content information on an apparatus, means for determining that at least one reduced interaction criteria has been satisfied to enter a reduced interaction mode determining that a hand is gripping the apparatus in a manner that is consistent with a use grip and means for causing display of, at least part of, the content information based, at least in part, on the determination that the hand is gripping the apparatus in a manner that is consistent with the use grip.

One or more example embodiments further perform precluding, at least in part, the reduced interaction mode based, at least in part, on the determination that the hand is gripping the apparatus in a manner that is consistent with the use grip.

In at least one example embodiment, the causation of display of information relates to retaining, at least part of, the content information.

In at least one example embodiment, retaining, at least part of, the content information relates to continuation of display of the content information absent an intervening reduced interaction mode.

In at least one example embodiment, the intervening reduced interaction mode relates to a reduced interaction mode that is attributable to the determination that the reduced interaction criteria has been satisfied to enter a reduced interaction mode.

In at least one example embodiment, determination that the hand is gripping the apparatus in a manner that is consistent with the use grip causes preclusion of entry into the reduced interaction mode, and that causation of display of the content information is based, at least in part, on the preclusion.

One or more example embodiments further perform causing display of the content information, determining that at least one reduced interaction criteria has been satisfied to enter the reduced interaction mode determining absence of a hand gripping the apparatus in a manner that is consistent with a use grip causing entry into the reduced interaction mode based, at least in part, on the determination that that at least one reduced interaction criteria has been satisfied to enter the reduced interaction mode and determination that the hand is gripping the apparatus in a manner that is consistent with the use grip and causing termination of the reduced interaction mode.

One or more example embodiments further perform determining that the hand is no longer gripping the apparatus in a manner that is consistent with a use grip, and causing entry of the reduced interaction mode based, at least in part, on the determination that the hand is no longer gripping the apparatus in a manner that is consistent with a use grip.

In at least one example embodiment, causation of entry of the lower power display mode is based, at least in part, on the determination that the reduced interaction criteria has been satisfied to enter a reduced interaction mode.

In at least one example embodiment, the reduced interaction mode relates to at least one of a standard lock mode, a low-power display mode, or a display-off mode.

In at least one example embodiment, the reduced interaction criteria relates to a lack of interactive input for a threshold duration.

In at least one example embodiment, the interactive input relates to non-grip related input.

In at least one example embodiment, the interactive input relates to at least one of a touch display input, a key-press input, or a gesture input.

One or more example embodiments further perform receiving information from at least one grip sensor, wherein the determination that the hand is gripping the apparatus in a manner that is consistent with the use grip is based, at least in part, on the information from the grip sensor.

In at least one example embodiment, the grip sensor relates to a sensor associated with a grip surface of the apparatus.

In at least one example embodiment, the grip surface relates to a surface of the apparatus configured to be held by a user.

In at least one example embodiment, configuration to be held by a user relates to an edge of the apparatus.

In at least one example embodiment, the grip surface relates to a back surface of the apparatus.

In at least one example embodiment, the back surface relates to a surface of the apparatus opposite to a surface associated with a primary display.

In at least one example embodiment, the reduced interaction mode relates to a lock mode.

One or more example embodiments further perform entering the lock mode, prior to determination the reduced interaction criteria has been satisfied to enter a reduced interaction mode, wherein causation of display of, at least part of, the content information relates to causing an increase in the amount of content displayed during the lock mode.

One or more example embodiments further perform detecting movement of the apparatus towards a user's face, and causing another increase in the amount of content displayed during the lock mode.

One or more example embodiments further perform receiving sensor information indicative of an action that is non-conducive to the user perceiving displayed information, and causing entry into the reduced interaction mode based, at least in part, on the sensor information.

In at least one example embodiment, causation of entry into the reduced interaction mode based, at least in part, on determination that the sensor information is indicative of the action being non-conducive to the user perceiving information by way of the display.

In at least one example embodiment, the action relates to at least one of the user walking with the apparatus, the user driving, or the apparatus being dropped.

### BRIEF DESCRIPTION OF THE DRAWINGS

For a more complete understanding of embodiments of the invention, reference is now made to the following descriptions taken in connection with the accompanying drawings in which:

FIGURE 1 is a block diagram showing an apparatus according to an example embodiment;

FIGURES 2A-2C are diagrams illustrating use grips according to at least one example embodiment;

FIGURES 3A-3B are diagrams illustrating an apparatus in relation to a user's face according to at least one example embodiment;

FIGURES 4A-4D are diagrams illustrating interaction modes according to at least one example embodiment;

FIGURE 5 is a flow diagram illustrating activities associated with interaction mode determination according to at least one example embodiment;

FIGURE 6 is a flow diagram illustrating activities associated with interaction mode determination according to at least one example embodiment;

FIGURE 7 is a flow diagram illustrating activities associated with interaction mode determination according to at least one example embodiment;

FIGURE 8 is a flow diagram illustrating activities associated with interaction mode determination according to at least one example embodiment;

FIGURE 9 is a flow diagram illustrating activities associated with interaction mode determination according to at least one example embodiment;

FIGURE 10 is a flow diagram illustrating activities associated with interaction mode determination according to at least one example embodiment;

FIGURE 11 is a flow diagram illustrating activities associated with interaction mode determination according to at least one example embodiment; and

FIGURE 12 is a flow diagram illustrating activities associated with interaction mode determination according to at least one example embodiment.

### DETAILED DESCRIPTION OF THE DRAWINGS

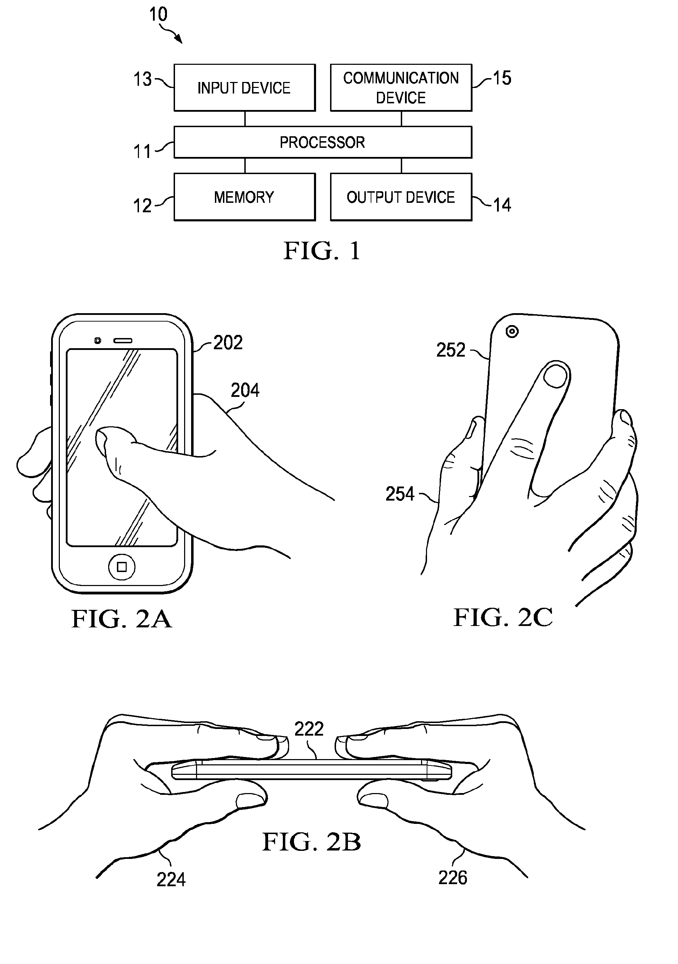

An embodiment of the invention and its potential advantages are understood by referring to FIGURES 1 through 12 of the drawings.

Some embodiments will now be described more fully hereinafter with reference to the accompanying drawings, in which some, but not all, embodiments are shown. Various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the spirit and scope of embodiments of the present invention.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network apparatus, other network apparatus, and/or other computing apparatus.

As defined herein, a "non-transitory computer-readable medium," which refers to a physical medium (e.g., volatile or non-volatile memory device), can be differentiated from a "transitory computer-readable medium," which refers to an electromagnetic signal.

FIGURE 1 is a block diagram showing an apparatus, such as an electronic apparatus 10, according to at least one example embodiment. It should be understood, however, that an electronic apparatus as illustrated and hereinafter described is merely illustrative of an electronic apparatus that could benefit from embodiments of the invention and, therefore, should not be taken to limit the scope of the invention. While electronic apparatus 10 is illustrated and will be hereinafter described for purposes of example, other types of electronic apparatuses may readily employ embodiments of the invention. Electronic apparatus 10 may be a portable digital assistant (PDAs), a pager, a mobile computer, a desktop computer, a television, a gaming apparatus, a laptop computer, a media player, a camera, a video recorder, a mobile phone, a global positioning system (GPS) apparatus, and/or any other types of electronic systems. Moreover, the apparatus of at least one example embodiment need not be the entire electronic apparatus, but may be a component or group of components of the electronic apparatus in other example embodiments.

Furthermore, apparatuses may readily employ embodiments of the invention regardless of their intent to provide mobility. In this regard, even though embodiments of the invention may be described in conjunction with mobile applications, it should be understood that embodiments of the invention may be utilized in conjunction with a variety of other applications, both in the mobile communications industries and outside of the mobile communications industries.

In at least one example embodiment, electronic apparatus 10 comprises processor 11 and memory 12. Processor 11 may be any type of processor, controller, embedded controller, processor core, and/or the like. In at least one example embodiment, processor 11 utilizes computer program code to cause an apparatus to perform one or more actions. Memory 12 may comprise volatile memory, such as volatile Random Access Memory (RAM) including a cache area for the temporary storage of data and/or other memory, for example, non-volatile memory, which may be embedded and/or may be removable. The non-volatile memory may comprise an EEPROM, flash memory and/or the like. Memory 12 may store any of a number of pieces of information, and data. The information and data may be used by the electronic apparatus 10 to implement one or more functions of the electronic apparatus 10, such as the functions described herein. In at least one example embodiment, memory 12 includes computer program code such that the memory and the computer program code are configured to, working with the processor, cause the apparatus to perform one or more actions described herein.

The electronic apparatus 10 may further comprise a communication device 15. In at least one example embodiment, communication device 15 comprises an antenna, (or multiple antennae), a wired connector, and/or the like in operable communication with a transmitter and/or a receiver. In at least one example embodiment, processor 11 provides signals to a transmitter and/or receives signals from a receiver. The signals may comprise signaling information in accordance with a communications interface standard, user speech, received data, user generated data, and/or the like. Communication device 15 may operate with one or more air interface standards, communication protocols, modulation types, and access types. By way of illustration, the electronic communication device 15 may operate in accordance with second-generation (2G) wireless communication protocols IS-136 (time division multiple access (TDMA)), Global System for Mobile communications (GSM), and IS-95 (code division multiple access (CDMA)), with third-generation (3G) wireless communication protocols, such as Universal Mobile Telecommunications System (UMTS), CDMA2000, wideband CDMA (WCDMA) and time division-synchronous CDMA (TD-SCDMA), and/or with fourth-generation (4G) wireless communication protocols, wireless networking protocols, such as 802.11, short-range wireless protocols, such as Bluetooth, and/or the like. Communication device 15 may operate in accordance with wireline protocols, such as Ethernet, digital subscriber line (DSL), asynchronous transfer mode (ATM), and/or the like.

Processor 11 may comprise means, such as circuitry, for implementing audio, video, communication, navigation, logic functions, and/or the like, as well as for implementing embodiments of the invention including, for example, one or more of the functions described herein. For example, processor 11 may comprise means, such as a digital signal processor device, a microprocessor device, various analog to digital converters, digital to analog converters, processing circuitry and other support circuits, for performing various functions including, for example, one or more of the functions described herein. The apparatus may perform control and signal processing functions of the electronic apparatus 10 among these devices according to their respective capabilities. The processor 11 thus may comprise the functionality to encode and interleave message and data prior to modulation and transmission. The processor 1 may additionally comprise an internal voice coder, and may comprise an internal data modem. Further, the processor 11 may comprise functionality to operate one or more software programs, which may be stored in memory and which may, among other things, cause the processor 11 to implement at least one embodiment including, for example, one or more of the functions described herein. For example, the processor 11 may operate a connectivity program, such as a conventional internet browser. The connectivity program may allow the electronic apparatus 10 to transmit and receive internet content, such as location-based content and/or other web page content, according to a Transmission Control Protocol (TCP), Internet Protocol (IP), User Datagram Protocol (UDP), Internet Message Access Protocol (IMAP), Post Office Protocol (POP), Simple Mail Transfer Protocol (SMTP), Wireless Application Protocol (WAP), Hypertext Transfer Protocol (HTTP), and/or the like, for example.

The electronic apparatus 10 may comprise a user interface for providing output and/or receiving input. The electronic apparatus 10 may comprise an output device 14. Output device 14 may comprise an audio output device, such as a ringer, an earphone, a speaker, and/or the like. Output device 14 may comprise a tactile output device, such as a vibration transducer, an electronically deformable surface, an electronically deformable structure, and/or the like. Output Device 14 may comprise a visual output device, such as a display, a light, and/or the like. The electronic apparatus may comprise an input device 13. Input device 13 may comprise a light sensor, a proximity sensor, a microphone, a touch sensor, a force sensor, a button, a keypad, a motion sensor, a magnetic field sensor, a camera, a hover sensor, a pressure sensor, a heat sensor, and/or the like. A touch sensor and a display may be characterized as a touch display. In an embodiment comprising a touch display, the touch display may be configured to receive input from a single point of contact, multiple points of contact, and/or the like. In such an embodiment, the touch display and/or the processor may determine input based, at least in part, on position, motion, speed, contact area, and/or the like.

The electronic apparatus 10 may include any of a variety of touch displays including those that are configured to enable touch recognition by any of resistive, capacitive, infrared, strain gauge, surface wave, optical imaging, dispersive signal technology, acoustic pulse recognition or other techniques, and to then provide signals indicative of the location and other parameters associated with the touch. Additionally, the touch display may be configured to receive an indication of an input in the form of a touch event which may be defined as an actual physical contact between a selection object (e.g., a finger, stylus, pen, pencil, or other pointing device) and the touch display. Alternatively, a touch event may be defined as bringing the selection object in proximity to the touch display, hovering over a displayed object or approaching an object within a predefined distance, even though physical contact is not made with the touch display. As such, a touch input may comprise any input that is detected by a touch display including touch events that involve actual physical contact and touch events that do not involve physical contact but that are otherwise detected by the touch display, such as a result of the proximity of the selection object to the touch display. A touch display may be capable of receiving information associated with force applied to the touch screen in relation to the touch input. For example, the touch screen may differentiate between a heavy press touch input and a light press touch input. In at least one example embodiment, a display may display two-dimensional information, three-dimensional information and/or the like.

In embodiments including a keypad, the keypad may comprise numeric (for example, 0-9) keys, symbol keys (for example, #, *), alphabetic keys, and/or the like for operating the electronic apparatus 10. For example, the keypad may comprise a conventional QWERTY keypad arrangement. The keypad may also comprise various soft keys with associated functions. In addition, or alternatively, the electronic apparatus 10 may comprise an interface device such as a joystick or other user input interface.

Input device 13 may comprise a media capturing element. The media capturing element may be any means for capturing an image, video, and/or audio for storage, display or transmission. For example, in at least one example embodiment in which the media capturing element is a camera module, the camera module may comprise a digital camera which may form a digital image file from a captured image. As such, the camera module may comprise hardware, such as a lens or other optical component(s), and/or software necessary for creating a digital image file from a captured image. Alternatively, the camera module may comprise only the hardware for viewing an image, while a memory device of the electronic apparatus 10 stores instructions for execution by the processor 11 in the form of software for creating a digital image file from a captured image. In at least one example embodiment, the camera module may further comprise a processing element such as a co-processor that assists the processor 11 in processing image data and an encoder and/or decoder for compressing and/or decompressing image data. The encoder and/or decoder may encode and/or decode according to a standard format, for example, a Joint Photographic Experts Group (JPEG) standard format.

FIGURES 2A-2C are diagrams illustrating use grips according to at least one example embodiment. The examples of FIGURES 2A-2C are merely examples, and do not limit the scope of the claims. For example, shape of the apparatus may vary, holding configuration of the apparatus may vary, and/or the like. For example, the user may grip the apparatus with a single hand and/or with two hands in various orientations of the apparatus.

Many electronic apparatuses are configured to be held by a user. For example, the apparatus may be a mobile phone, a tablet, a personal digital assistant, a camera, a video recorder, a remote control unit, a game console, and/or the like. Such apparatuses may be configured such that surfaces of the apparatus are associated with holding the apparatus. In at least one example embodiment, a surface of the apparatus that is configured to be held by a user is referred to as a grip surface of the apparatus. For example, the apparatus may be designed such that holding the apparatus is facilitated by one or more grip surfaces of the apparatus. For example, the apparatus may be shaped to allow a user to hold the apparatus from the sides of the apparatus, the back of the apparatus, and/or the like. In at least one example embodiment, a surface in which holding the apparatus may cause contact with the apparatus is referred to as a grip surface of the apparatus. For example, even though an apparatus may be configured to be held by a single hand at grip surfaces on opposite sides of the apparatus, the back surface of the apparatus may be contacted by the hand due to the hand holding each side of the apparatus. In this manner, the back of the apparatus may be a grip surface of the apparatus.

The apparatus may have one or more grip surfaces. For example, the user may contact one or more surfaces of the apparatus as a result of holding the apparatus. For example, a grip surface of the apparatus may be at least part of one or more edges of the apparatus, at least part of a back surface of the apparatus, at least part of a handle of the apparatus, and/or the like. In at least one example embodiment, an edge of an apparatus relates to a surface of the apparatus associated with a side of the apparatus, such as a left side, a top side, a bottom side, a right side, and/or the like. In at least one example embodiment, an edge may be characterized by way of being a surface that is neither a front surface nor a rear surface. In at least one example embodiment, a front surface of the apparatus relates to a surface of the apparatus configured to face towards a user when the apparatus is in use. For example, the front of the apparatus may comprise at least one primary display. In such an example, the primary display may be characterized by being the only display of the apparatus, the largest display of the apparatus, the most interactive display of the apparatus, and/or the like. In at least one example embodiment, the back surface of the apparatus is a surface of the apparatus that is opposite to the front surface of the apparatus. For example, the back surface may relate to a surface of the apparatus opposite to a surface associated with a primary display.

In at least one example embodiment, a use grip relates to a hand contacting the apparatus in a manner that indicates that the hand is holding the apparatus in a way that facilitates use of the apparatus. For example, the use grips of the examples of FIGURES 2A-2C are examples of the apparatus being held in a manner that facilitates use of the apparatus. For example, the user may view the display, may perform input, and/or the like.

FIGURE 2A is a diagram illustrating a use grip according to at least one example embodiment. The example of FIGURE 2A shows apparatus 202 being held in hand 204. It can be seen that the right edge of apparatus 202 and the left edge of apparatus 202 are grip surfaces of apparatus 202. In addition, hand 204 is contacting apparatus 202 at the back surface of apparatus 202 due to hand 204 holding apparatus 202. In this manner, the back surface of apparatus 202 may be a grip surface of apparatus 202.

FIGURE 2B is a diagram illustrating a use grip according to at least one example embodiment. The example of FIGURE 2B shows apparatus 222 being held in hands 224 and 226. It can be seen that the right edge of apparatus 222 and the left edge of apparatus 222 are grip surfaces of apparatus 222. In addition, hands 224 and 226 are contacting apparatus 222 at the back surface of apparatus 222 due to hands 224 and 226 holding apparatus 222. In this manner, the back surface of apparatus 222 may be a grip surface of apparatus 222.

In some circumstances, an apparatus may be configured to be held in multiple orientations, in multiple holding configurations, and/or the like. For example, apparatus 222 may be the same apparatus as apparatus 202 of FIGURE 2A. For example, FIGURE 2A may depict apparatus 222 being held at a different orientation than the example of FIGURE 2B. Therefore, more than two edges of apparatus 222 may be grip surfaces. For example, the apparatus may treat a surface as a grip surface even if the user is not currently holding the apparatus in a manner that holding the apparatus results in contact at the grip surface.

FIGURE 2C is a diagram illustrating a use grip according to at least one example embodiment. The example of FIGURE 2C shows apparatus 242 being held in hand 244. It can be seen that the right edge of apparatus 242 and the left edge of apparatus 242 are grip surfaces of apparatus 242. In addition, hand 244 is contacting apparatus 244 at the back surface of apparatus 242 due to hand 244 holding apparatus 242. In this manner, the back surface of apparatus 242 may be a grip surface of apparatus 242. It can be seen that a finger of hand 254 is contacting apparatus 252 upward from the position at which hand 254 is contacting the surface of apparatus 252. The user may be utilizing such finger position to control the angle of apparatus 252, to stabilize apparatus 252, and/or the like. Therefore, even though such finger position may not be necessary for the apparatus to be supported by the user, the upper part of the back surface may be a grip surface by way of the apparatus being configured such that a user may place one or more fingers at the upper part of the apparatus to facilitate holding the apparatus in a desired manner.

In some circumstances, it may be desire to determine whether there is a hand gripping the apparatus in a manner that is consistent with a use grip. For example, even though an apparatus may be capable of determining that a hand may be gripping the apparatus, it may be further desirable to determine whether the grip of the apparatus is consistent with the user holding the apparatus in a manner that facilitates use of the apparatus. For example, the user may grip the apparatus to simply carry the apparatus without using the apparatus, may grip the apparatus to move the apparatus from one place to another, and/or the like. For example, it may be desirable to differentiate between a user taking the apparatus from a bag versus the user holding the apparatus to perform input on the apparatus. For example, the apparatus may infer that the user desires to utilize the apparatus based, at least in part, on the user gripping the apparatus in a manner that is consistent with a use grip.

The apparatus may determine presence of a hand gripping the apparatus, one or more characteristics of a grip, and/or the like, by way of one or more sensors associated with the apparatus. In at least one example embodiment, a sensor that is configured to receive information indicative of a use grip is referred to as a grip sensor. For example the apparatus may comprise one or more touch sensors, proximity sensors, light sensors, force sensors, and/or the like, that provide sensor information indicative of a grip that is indicative of a use grip. For example, one or more sensors may be configured to receive information associated with one or more grip surface of the apparatus.

The apparatus may comprise one or more use grip profiles. In at least one example embodiment, a use grip profile relates to information indicative of a grip that is consistent with a use grip. For example, the apparatus may evaluate sensor information to determine if the sensor information is consistent with one or more use grip profiles. If the apparatus determines consistency between sensor information and a use grip profile, the apparatus may determine that a hand is gripping the apparatus in a manner that is consistent with a use grip.

Similarly, an apparatus may determine absence of a hand gripping the apparatus in a manner that is consistent with a use grip. For example, the apparatus may determine absence of a hand gripping the apparatus in a manner that is consistent with a use grip based, at least in part, on a determination that the apparatus is not being gripped, a determination that a grip of the apparatus is inconsistent with a use grip, and/or the like.

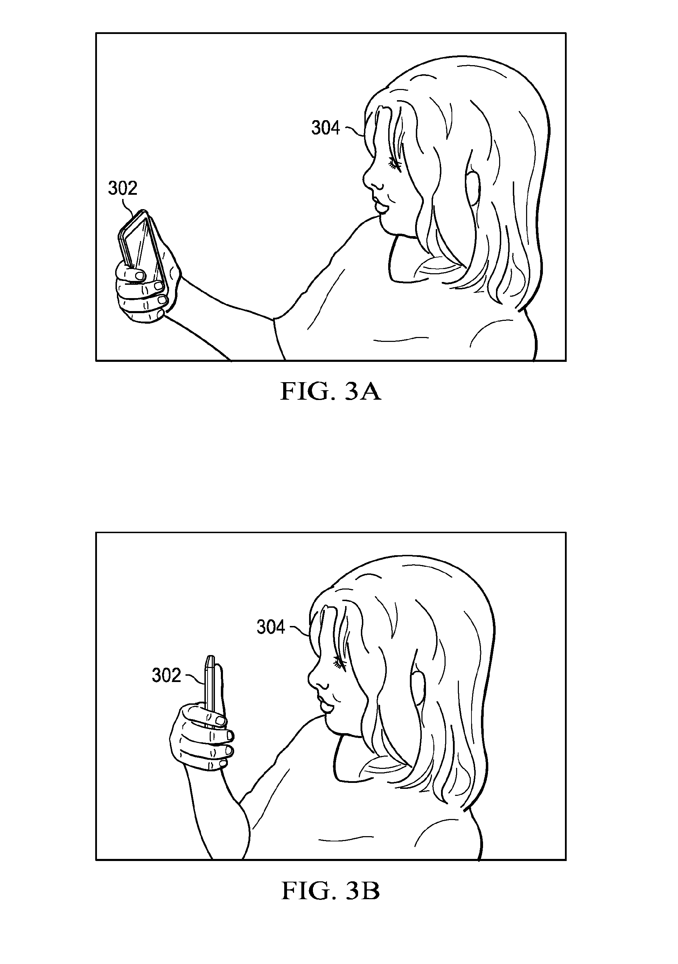

FIGURES 3A-3B are diagrams illustrating an apparatus in relation to a user's face according to at least one example embodiment. The examples of FIGURES 3A-3B are merely examples, and do not limit the scope of the claims. For example, orientation between the apparatus and the user may vary, configuration of the apparatus may vary, position of the apparatus may vary, and/or the like.

In some circumstances, it may be desirable to determine if an apparatus is facing a user. For example, it may be desirable to determine if a user may be capable of seeing information displayed on a display of the apparatus. In at least one example embodiment, the apparatus may determine whether a user is facing the apparatus based, at least in part, on face detection, face recognition, and/or the like.

In some circumstances, it may be desirable to determine how close a user's face is to the apparatus. For example, it may be desirable to identify whether the apparatus is being moved towards the user's face, away from the user's face, being held at a consistent distance from the user's face, and/or the like. In at least one example embodiment, the apparatus may determine movement of the apparatus relative to the user's face by way of face detection, face recognition, accelerometer information, position information, proximity information, and/or the like.

In the example of FIGURE 3A, it can be seen that apparatus 302 is facing user face 304. In this manner, the user may be able to see information displayed on a display of apparatus 302. In the example of FIGURE 3B, it can be seen that apparatus 302 is facing user face 304. In this manner, the user may be able to see information displayed on a display of apparatus 302. It can be seen that the user is holding the apparatus further away from the user's face in the example of FIGURE 3A than in the example of FIGURE 3B. In at least one example embodiment, the apparatus may determine a difference in the distance between the user's face and the apparatus in the circumstances of FIGURE 3A versus the circumstances of FIGURE 3B. In at least one example embodiment, the apparatus may determine occurrence of movement that would cause a difference in the distance between the user's face and the apparatus in the circumstances of FIGURE 3A versus the circumstances of FIGURE 3B.

In at least one example embodiment, the apparatus may infer amount of user attentiveness based, at least in part, on the distance between the apparatus and the user's face, movement of the apparatus towards the user's face, movement of the apparatus away from the user's face, and/or the like. For example, a shorter distance between the user's face and the apparatus may be indicative of a higher degree of user attentiveness than a longer distance between the user's face and the apparatus. In another example, movement of the apparatus towards the face of the user may be indicative of a higher degree of user attentiveness than movement of the apparatus away from the user's face.

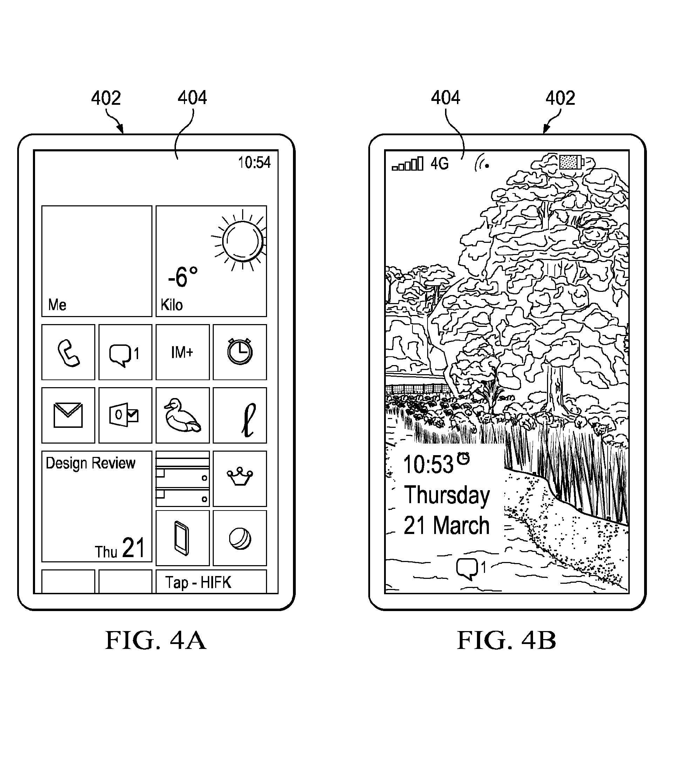

FIGURES 4A-4D are diagrams illustrating interaction modes according to at least one example embodiment. The examples of FIGURES 4A-4D are merely examples, and do not limit the scope of the claims. For example, type of content information may vary, arrangement of content information may vary, amount of content information may vary, and/or the like.

As users have become more accustomed to persistently having an electronic apparatus accompany them, there has been an increasing desire for electronic apparatuses to adapt to the user's desired level of interaction with the apparatus. For example, the user may desire a fully interactive interaction mode when the user is performing input on the apparatus, utilizing an application on the apparatus, and/or the like. In another example, the user may desire that the apparatus be in an interaction mode that restricts input, such as a lock mode. In at least one example embodiment, a lock mode relates to an interaction mode in which the operations that a user may invoke by way of input are restricted. In at least one example embodiment, a lock mode is characterized by restriction of operations that may be invoked by inputs until the user performs a predestinated input that is indicative of unlocking the apparatus, until the apparatus receives an indication of an event that the user may act upon, and/or the like. For example, the apparatus may receive a call event that, at least temporarily, terminates the lock mode. In another example, the user may perform a predetermined input that serves as an unlock code that causes termination of the lock mode. In at least one example embodiment, termination of the lock mode relates to a transition from the lock mode to a non-locked interaction mode.

In at least one example embodiment, the apparatus may cause display of content information during a fully interactive interaction mode. For example, the apparatus may display information associated with an operating environment of the apparatus, information associated with an application running on the apparatus, and/or the like. In at least one example embodiment, content information relates to information associated with operation of at least one program running on the apparatus. For example, content information may relate to a messaging program, a call logging program, a calendar program, a weather program, a location program, and/or the like.

FIGURE 4A is a diagram illustrating a fully interactive interaction mode according to at least one example embodiment. It can be seen that apparatus 402 is causing display of content information on display 404. It can be seen that the content information of the example of FIGURE 4A relates to operation of the apparatus. For example, the content information provides for tiles that may be selected to invoke an application, to transition to an application, and/or the like. In this manner, the apparatus may receive input that controls one or more programs.

In at least one example embodiment, the apparatus may cause display of content information during a lock mode. For example, the apparatus may provide status information associated with one or more applications. For example, the apparatus may provide a background image, a clock status, calendar information, alarm clock information, battery information, signal strength information, connectivity information, weather information, messaging information, and/or the like.

FIGURE 4B is a diagram illustrating a standard lock mode according to at least one example embodiment. It can be seen that apparatus 402 is causing display of content information on display 404. It can be seen that the content information of the example of FIGURE 4B relates to status information of the apparatus. For example, the content information provides for a background image, clock information, calendar information, alarm clock information, battery information, signal strength information, connectivity information, weather information, messaging information, and/or the like. It can be seen that the interaction mode of FIGURE 4B does not necessarily comprise any interactive elements. In at least one example embodiment, a standard lock mode is absent interactive elements. For example, the standard lock mode may restrict operations associated with input to an unlock operation associated with termination of the standard lock mode.

In some circumstances, it may be desirable to reduce the amount of power consumed by a display when the apparatus is in a lock mode. For example, it may be desirable to limit the brightness of the display, the color range of the display, the resolution of the display, and/or the like, while causing display of content information. In at least one example embodiment, the causation of display of content information subject to a display power limitation relates to a low-power display mode. In at least one example embodiment, a lock mode associated with display of content information subject to a display power limitation relates to a low-power display lock mode. In at least one example embodiment, the low-power display mode causes display of different content information than the standard display mode, less content information than the standard display mode, and/or the like. For example, the low-power display lock mode may cause display of less content information than the standard lock mode. For example, the standard lock mode may provide status information that is omitted from the low-power display lock mode, may provide more detailed status information than the low-power display lock mode, and/or the like. In at least one example embodiment, a low-power display mode causes display of information that is not included in a low-power display lock mode.

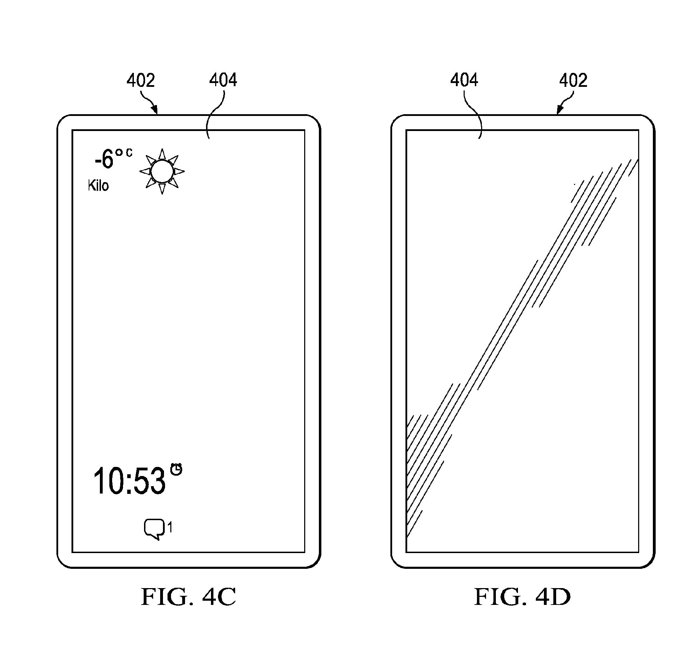

FIGURE 4C is a diagram illustrating a low-power display lock mode according to at least one example embodiment. It can be seen that apparatus 402 is causing display of content information on display 404. It can be seen that the content information of the example of FIGURE 4C relates to status information of the apparatus. It can be seen that the content information of FIGURE 4C is less than the content information of FIGURE 4B. For example, even though the low-power display lock mode of FIGURE 4C causes display of clock information, weather information, messaging information, and/or the like, other content information that is displayed in the standard lock mode of FIGURE 4B is omitted.

In some circumstances, it may be desirable to provide a display-off interaction mode. For example, it may be determined that the user does not desire to view the display, that the user is inattentive, and/or the like. In at least one example embodiment, the apparatus may have a display-off lock mode.

FIGURE 4D is a diagram illustrating a display-off lock mode according to at least one example embodiment. It can be seen that apparatus 402 is causing display of no content information on display 404. In at least one example embodiment, the apparatus precludes display of content information during a display-off lock mode. In this manner, the amount of content information displayed in the example of FIGURE 4D is less than the amount of content information displayed in the example of FIGURE 4C.

In at least one example embodiment, interaction modes may be categorized in terms of level of interaction. For example, an interaction mode may relate to a standard interaction mode, a reduced interaction mode, and/or the like. In at least one example embodiment, a reduced interaction mode relates to an interaction mode that is less interactive than a current interaction mode. In at least one example embodiment, level of interaction may be categorized by an amount of content information displayed during the interaction mode. For example, when an apparatus is in a standard interaction mode, such as a fully interactive interaction mode, a reduced interaction mode may relate to a standard lock mode, a low-power display mode, a low-power display lock mode, a display-off mode, a display-off lock mode, and/or the like. In another example, when an apparatus is in a standard lock mode, a reduced interaction mode may relate to a low-power display lock mode, a display-off lock mode, and/or the like. In yet another example, when an apparatus is in a low-power display lock mode, a reduced interaction mode may relate to a display-off lock mode.

In at least one example embodiment, an increased interaction mode relates to an interaction mode that is more interactive than a current interaction mode. In at least one example embodiment, level of interaction may be categorized by an amount of content information displayed during the interaction mode. For example, when an apparatus is in a display-off lock mode, an increased interaction mode may relate to a fully interactive interaction mode, a standard lock mode, a low-power display mode, a low-power display lock mode, and/or the like. In another example, when an apparatus is in a low-power display lock mode, an increased interaction mode may relate to a fully interactive interaction mode, a standard lock mode, and/or the like. In yet another example, when an apparatus is in a standard lock mode, an increased interaction mode may relate to a fully interactive interaction mode.

In at least one example embodiment, the apparatus may evaluate operations of the apparatus to determine whether to enter a reduced interaction mode. In at least one example embodiment, the apparatus determines whether one or more reduced interaction criteria have been satisfied. The apparatus may base entry into the reduced interaction mode, at least in part, on the determination that the reduced interaction criteria has been satisfied. In at least one example embodiment, the reduced interaction criteria relates to a lack of interactive input for a threshold duration. In at least one example embodiment, the threshold duration relates to a duration beyond which the apparatus determines that entry into a reduced interaction mode may be desirable. For example, if the user has not performed interactive input within the threshold duration, the apparatus may determine that the user is inattentive, that the user does not desire to view information displayed on a display of the apparatus, and/or the like. In at least one example embodiment the interactive input relates to non-grip related input. For example, the interactive input may be an input unassociated with a grip sensor. For example, the interactive input may relate a touch display input, a key-press input, a gesture input, and/or the like.

In some circumstances, the user may desire to view information displayed by the apparatus even though a reduced interaction criteria has been met. For example, the user may still be attentive to the apparatus without necessarily performing interactive input. For example, it may be desirable to avoid circumstances where some users may feel compelled to perform interactive input for the purpose of preventing the apparatus from entering a reduced interaction mode. In at least one example embodiment, the apparatus may base entry and/or non-entry into a reduced interaction mode on whether a hand is gripping the apparatus in a manner that is consistent with the use grip, whether a user is facing a display, distance between the user's face and the apparatus, change in distance between the apparatus and the user's face, and/or the like.

In at least one example embodiment, the apparatus causes display of content information and continues causing display of the content information based at least in part, on the determination that the hand is gripping the apparatus in a manner that is consistent with the use grip, even if the apparatus determines that at least one reduced interaction criteria has been satisfied to enter a reduced interaction mode. For example, the apparatus may predicate entry into the reduced interaction mode on a determination of lack of a hand gripping the apparatus in a manner that is consistent with the use grip. In such an example, the apparatus may cause entry into the reduced interaction mode based, at least in part, on the determination that that at least one reduced interaction criteria has been satisfied to enter the reduced interaction mode and determination of lack of a hand gripping the apparatus in a manner that is consistent with the use grip.

In at least one example embodiment, the apparatus precludes, at least in part, the reduced interaction mode based, at least in part, on the determination that the hand is gripping the apparatus in a manner that is consistent with the use grip. For example, when the apparatus is displaying content information and determines that at least one reduced interaction criteria has been satisfied to enter a reduced interaction mode, the apparatus may retain, at least part of, the content information. In at least one example embodiment, the apparatus retains all of the display content information, for example, by precluding entry into the reduced interaction mode. In at least one example embodiment, retaining, at least part of, the content information relates to continuation of display of the content information absent an intervening reduced interaction mode. In at least one example embodiment, the intervening reduced interaction mode relates to a reduced interaction mode that is attributable to the determination that the reduced interaction criteria has been satisfied to enter a reduced interaction mode. In at least one example embodiment, an interaction mode is intervening if the apparatus transitions to the interaction mode. In this manner, retaining, at least part of, the content information relates to continuation of display of the content information without a transition to another interaction mode.

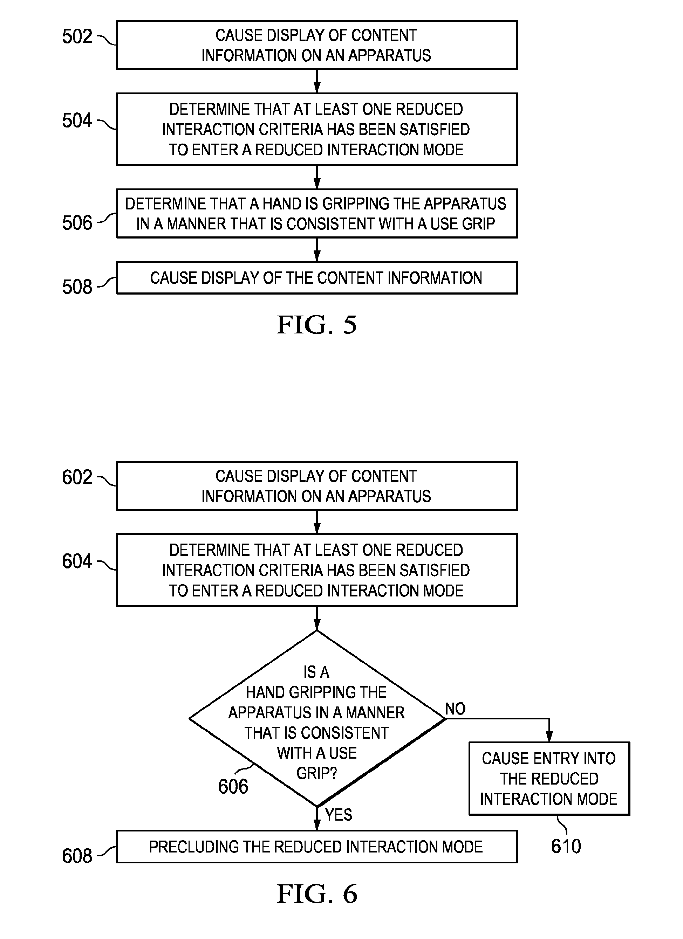

FIGURE 5 is a flow diagram illustrating activities associated with interaction mode determination according to at least one example embodiment. In at least one example embodiment, there is a set of operations that corresponds with the activities of FIGURE 5. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 5.

At block 502, the apparatus causes display of content information on an apparatus. The causation and the content information may be similar as described regarding FIGURES 4A-4D. Block 502 may be characterized by the apparatus being in an interaction mode associated with display of content information, such as a fully interactive interaction mode, a low-power display mode, a low-power display lock mode, and/or the like.

At block 504, the apparatus determines that at least one reduced interaction criteria has been satisfied to enter a reduced interaction mode. The determination, the reduced interaction criteria, the satisfaction, and the reduced interaction mode may be similar as described regarding FIGURES 4A-4D.

At block 506, the apparatus determines that a hand is gripping the apparatus in a manner that is consistent with a use grip. The determination, the grip, the manner, the consistency, and the use grip may be similar as described regarding FIGURES 2A-2C.

At block 508, the apparatus causes display of, at least part of, the content information. In this manner, causation of display of the content information may be based, at least in part, on the determination that the hand is gripping the apparatus in a manner that is consistent with the use grip. In some circumstances, block 508 may be characterized by the apparatus being in the same interaction mode as in block 502.

FIGURE 6 is a flow diagram illustrating activities associated with interaction mode determination according to at least one example embodiment. In at least one example embodiment, there is a set of operations that corresponds with the activities of FIGURE 6. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 6.

As previously described, in at least one example embodiment, determination that the hand is gripping the apparatus in a manner that is consistent with the use grip causes preclusion of entry into the reduced interaction mode, and that causation of display of the content information is based, at least in part, on the preclusion. For example, the user may desire to continue viewing information that is displayed by the apparatus without necessarily performing input associated with avoiding entry into a reduced interaction mode. For example, the user may desire to simply continue holding the apparatus so that the user may continue to view the content information displayed by the apparatus.

At block 602, the apparatus causes display of content information on an apparatus, similarly as described regarding block 502 of FIGURE 5. At block 604, the apparatus determines that at least one reduced interaction criteria has been satisfied to enter a reduced interaction mode, similarly as described regarding block 504 of FIGURE 5.

At block 606, the apparatus determines whether a hand is gripping the apparatus in a manner that is consistent with a use grip. The determination, the grip, the manner, the consistency, and the use grip may be similar as described regarding FIGURES 2A-2C. If the apparatus determines that a hand is gripping the apparatus in a manner that is consistent with a use grip, flow proceeds to block 608. If the apparatus determines lack of a hand gripping the apparatus in a manner that is consistent with a use grip, flow proceeds to block 610.

At block 608, the apparatus precludes, at least in part, the reduced interaction mode. The preclusion may be similar as described regarding FIGURES 4A-4D, and/or the like. In this manner, the preclusion may be based, at least in part, on the determination that the hand is gripping the apparatus in a manner that is consistent with the use grip. In at least one example embodiment, preclusion relates to retaining, at least part of, the content information, retaining the current interaction mode, and/or the like.

At block 610, the apparatus enters the reduced interaction mode. The entry may be similar as described regarding FIGURES 4A-4D.

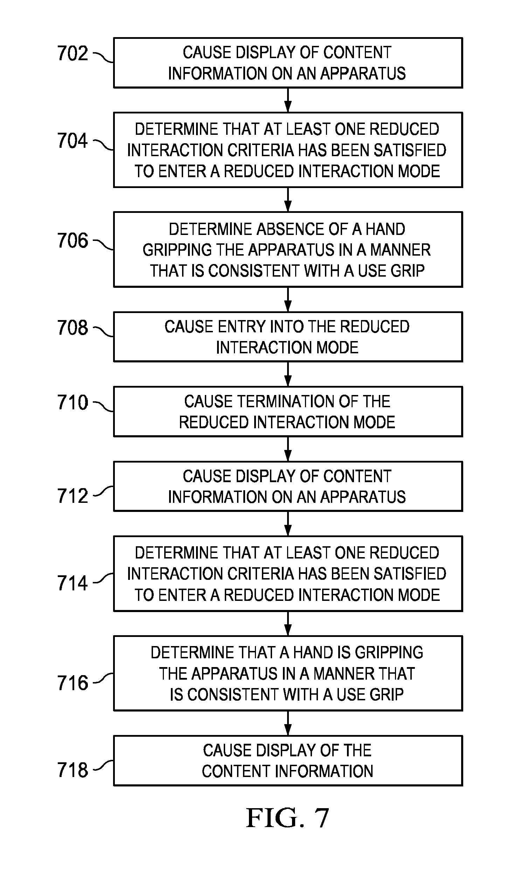

FIGURE 7 is a flow diagram illustrating activities associated with interaction mode determination according to at least one example embodiment. In at least one example embodiment, there is a set of operations that corresponds with the activities of FIGURE 7. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 7.

At block 702, the apparatus causes display of content information, similar as described regarding block 502 of FIGURE 5. At block 704, the apparatus determines that at least one reduced interaction criteria has been satisfied to enter a reduced interaction mode, similarly as described regarding block 504 of FIGURE 5.

At block 706, the apparatus determines absence of a hand gripping the apparatus in a manner that is consistent with a use grip. The determination, the absence, the grip, the manner, the consistency, and the use grip may be similar as described regarding FIGURES 2A-2C.

At block 708, the apparatus causes entry into the reduced interaction mode. The causation and the entry may be similar as described regarding FIGURES 4A-4D. In this manner, causation of entry into the reduced interaction mode may be based, at least in part, on the determination that that at least one reduced interaction criteria has been satisfied to enter the reduced interaction mode. Furthermore, causation of entry into the reduced interaction mode may be based, at least in part, on the determination of lack of a hand gripping the apparatus in a manner that is consistent with the use grip.

At block 710, the apparatus causes termination of the reduced interaction mode. The causation and the termination may be similar as described regarding FIGURES 4A-4D. In at least one example embodiment, termination of the reduced interaction mode relates to transitioning from the reduced interaction mode to an increased interaction mode, transitioning from the reduced interaction mode to a fully interactive interaction mode, and/or the like. For example, termination of the reduced interaction mode may relate to transitioning from a lock mode to a non-locked interaction mode. In at least one example embodiment, termination of the reduced interaction mode relates to returning from the reduced interaction mode to the interaction mode that was active prior to entry of the reduced interaction mode.

At block 712, the apparatus causes display of content information on an apparatus, similarly as described regarding block 502 of FIGURE 5. At block 714, the apparatus determines that at least one reduced interaction criteria has been satisfied to enter a reduced interaction mode, similarly as described regarding block 504 of FIGURE 5. At block 716, the apparatus determines that a hand is gripping the apparatus in a manner that is consistent with a use grip, similarly as described regarding block 506 of FIGURE 5. At block 718, the apparatus causes display of, at least part of, the content information, similarly as described regarding block 508 of FIGURE 5.

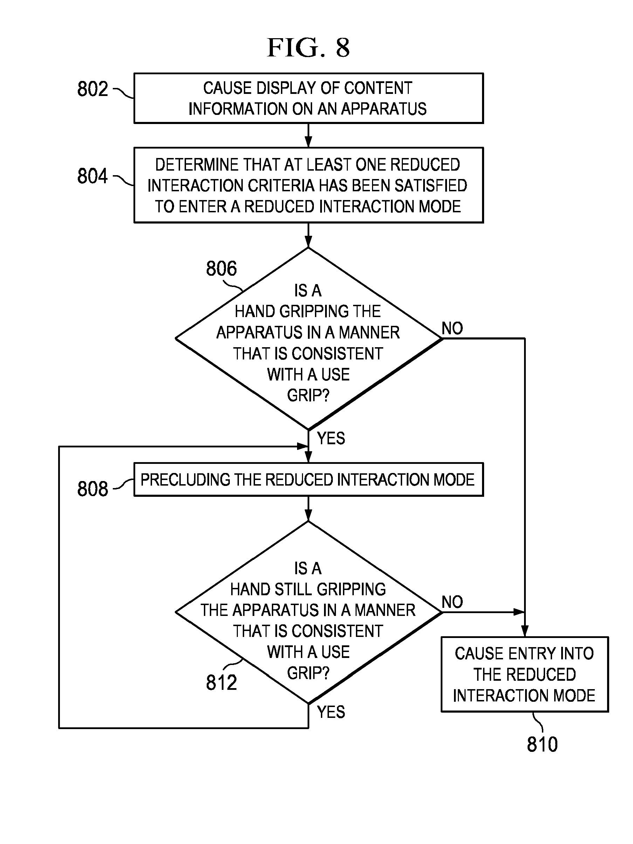

FIGURE 8 is a flow diagram illustrating activities associated with interaction mode determination according to at least one example embodiment. In at least one example embodiment, there is a set of operations that corresponds with the activities of FIGURE 8. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 8.

At block 802, the apparatus causes display of content information on an apparatus, similarly as described regarding block 502 of FIGURE 5. At block 804, the apparatus determines that at least one reduced interaction criteria has been satisfied to enter a reduced interaction mode, similarly as described regarding block 504 of FIGURE 5.

At block 806, the apparatus determines whether a hand is gripping the apparatus in a manner that is consistent with a use grip. The determination, the grip, the manner, the consistency, and the use grip may be similar as described regarding FIGURES 2A-2C. If the apparatus determines that a hand is gripping the apparatus in a manner that is consistent with a use grip, flow proceeds to block 808. If the apparatus determines lack of a hand gripping the apparatus in a manner that is consistent with a use grip, flow proceeds to block 810.

At block 810, the apparatus enters the reduced interaction mode, similarly as described regarding block 610 of FIGURE 6.

At block 808, the apparatus precludes, at least in part, the reduced interaction mode, similarly as described regarding block 608 of FIGURE 6.

At block 812, the apparatus determines whether a hand is still gripping the apparatus in a manner that is consistent with a use grip. The determination, the grip, the manner, the consistency, and the use grip may be similar as described regarding FIGURES 2A-2C. If the apparatus determines that a hand is still gripping the apparatus in a manner that is consistent with a use grip, flow returns to block 808. If the apparatus determines that a hand is no longer gripping the apparatus in a manner that is consistent with a use grip, flow proceeds to block 810. In this manner, the apparatus may cause entry of the reduced interaction mode based, at least in part, on the determination that the hand is no longer gripping the apparatus in a manner that is consistent with a use grip. In such circumstances, causation of entry of the lower power display mode may be based, at least in part, on the determination that the reduced interaction criteria has been satisfied to enter a reduced interaction mode.

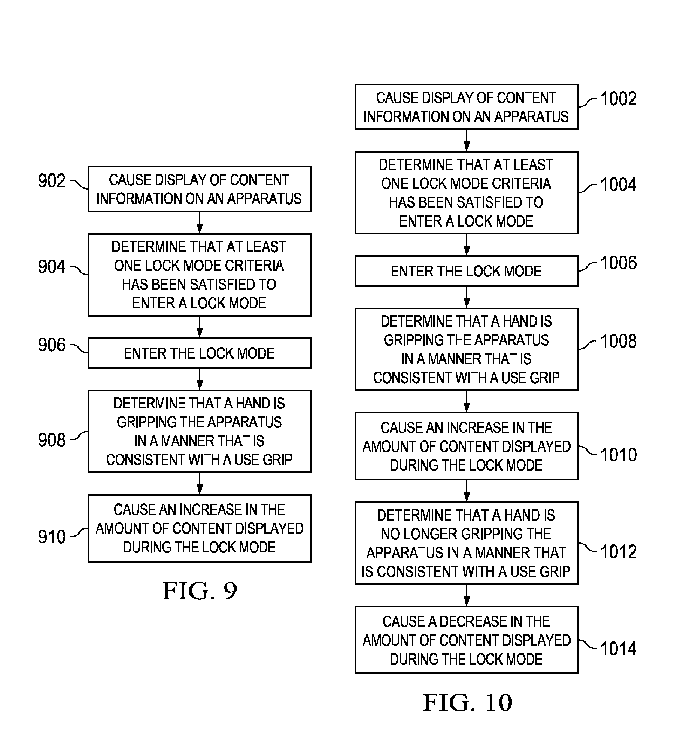

FIGURE 9 is a flow diagram illustrating activities associated with interaction mode determination according to at least one example embodiment. In at least one example embodiment, there is a set of operations that corresponds with the activities of FIGURE 9. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 9.

In some circumstances, it may be desirable to govern the amount of content information displayed in a lock mode based, at least in part, on the determination that a hand is gripping the apparatus in a manner that is consistent with a use grip. For example, if the apparatus is already in a lock mode, the apparatus may cause entry into an increased interaction mode based, at least in part, on the determination that a hand is gripping the apparatus in a manner that is consistent with a use grip. In this manner, upon determination that a hand is gripping the apparatus in a manner that is consistent with a use grip, causation of display of, at least part of, the content information relates to causing an increase in the amount of content displayed during the lock mode.

At block 902, the apparatus causes display of content information on an apparatus, similarly as described regarding block 502 of FIGURE 5.

At block 904, the apparatus determines that at least one lock mode criteria has been satisfied to enter a lock mode. The determination, the lock mode criteria, the satisfaction, and lock mode may be similar as described regarding FIGURES 4A-4D. At block 906, the apparatus enters the lock mode.

At block 908, the apparatus determines that a hand is gripping the apparatus in a manner that is consistent with a use grip, similarly as described regarding block 506 of FIGURE 5.

At block 910, the apparatus causes an increase in the amount of content information displayed during the lock mode. For example, the apparatus may transition from a display-off lock mode to a low-power lock mode, from a low-power lock mode to a lock mode, and/or the like.

FIGURE 10 is a flow diagram illustrating activities associated with interaction mode determination according to at least one example embodiment. In at least one example embodiment, there is a set of operations that corresponds with the activities of FIGURE 10. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 10.

At block 1002, the apparatus causes display of content information on an apparatus, similarly as described regarding block 502 of FIGURE 5. At block 1004, the apparatus determines that at least one lock mode criteria has been satisfied to enter a lock mode, similarly as described regarding block 904 of FIGURE 9. At block 1006, the apparatus enters the lock mode, similarly as described regarding block 906 of FIGURE 9. At block 1008, the apparatus determines that a hand is gripping the apparatus in a manner that is consistent with a use grip, similarly as described regarding block 506 of FIGURE 5. At block 1010, the apparatus causes an increase in the amount of content information displayed during the lock mode, similarly as described regarding block 910 of FIGURE 9.

At block 1012, the apparatus determines that a hand is no longer gripping the apparatus in a manner that is consistent with a use grip. The determination, the grip, the manner, the consistency, and the use grip may be similar as described regarding FIGURES 2A-2C.

At block 1014, the apparatus causes a decrease in the amount of content displayed during the lock mode. For example, the apparatus may transition to a reduced interaction mode.

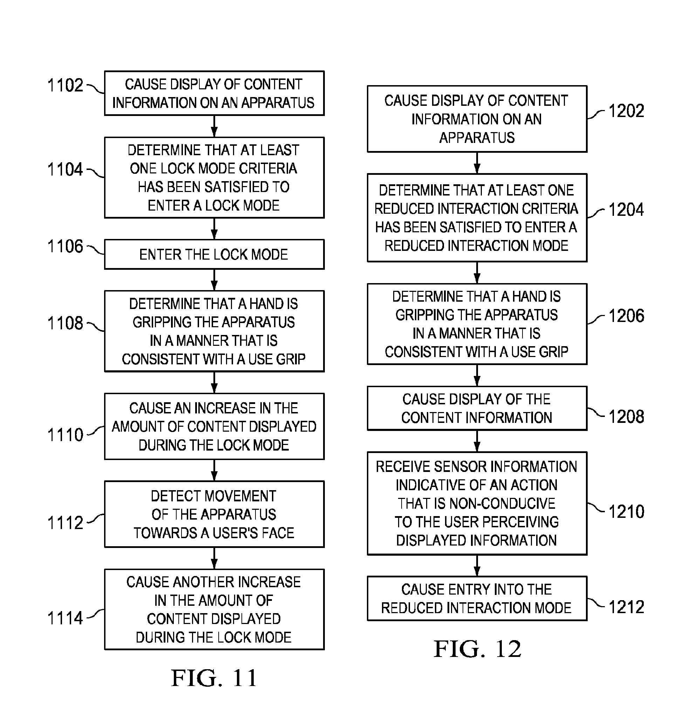

FIGURE 11 is a flow diagram illustrating activities associated with interaction mode determination according to at least one example embodiment. In at least one example embodiment, there is a set of operations that corresponds with the activities of FIGURE 11. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 11.

In some circumstances, the apparatus may base the amount of content information displayed in a lock mode, at least in part, on a distance between the apparatus and the face of the user. For example, the apparatus may increase the amount of content information displayed when the apparatus is moved towards the face of the user, may reduce the amount of content information displayed when the apparatus is moved away from the user, and/or the like.

Similarly, the apparatus may base the interaction mode, at least in part, on a distance between the apparatus and the face of the user. For example, the apparatus may transition to an increased interaction lock mode when the apparatus is moved towards the face of the user, transition to a reduced interaction mode when the apparatus is moved away from the user, and/or the like.

At block 1102, the apparatus causes display of content information on an apparatus, similarly as described regarding block 502 of FIGURE 5. At block 1104, the apparatus determines that at least one lock mode criteria has been satisfied to enter a lock mode, similarly as described regarding block 904 of FIGURE 9. At block 1106, the apparatus enters the lock mode, similarly as described regarding block 906 of FIGURE 9. At block 1108, the apparatus determines that a hand is gripping the apparatus in a manner that is consistent with a use grip, similarly as described regarding block 506 of FIGURE 5. At block 1110, the apparatus causes an increase in the amount of content information displayed during the lock mode, similarly as described regarding block 910 of FIGURE 9.

At block 1112, the apparatus detects movement of the apparatus towards a user's face. The detection, the movement, and the user's face, may be similar as described regarding FIGURES 3A-3B.

At block 1114, the apparatus causes another increase in the amount of content displayed during the lock mode. For example, the apparatus may transition to an increased interaction lock mode.

FIGURE 12 is a flow diagram illustrating activities associated with interaction mode determination according to at least one example embodiment. In at least one example embodiment, there is a set of operations that corresponds with the activities of FIGURE 12. An apparatus, for example electronic apparatus 10 of FIGURE 1, or a portion thereof, may utilize the set of operations. The apparatus may comprise means, including, for example processor 11 of FIGURE 1, for performance of such operations. In an example embodiment, an apparatus, for example electronic apparatus 10 of FIGURE 1, is transformed by having memory, for example memory 12 of FIGURE 1, comprising computer code configured to, working with a processor, for example processor 11 of FIGURE 1, cause the apparatus to perform set of operations of FIGURE 12.

In some circumstances, the apparatus may determine to enter a reduced interaction mode regardless of a determination that a hand is gripping the apparatus in a manner that is consistent with a use grip. For example, the apparatus may determine that the user is performing an action that is non-conducive to the user perceiving displayed content information. For example, the user may be walking, driving, dropping the apparatus, may be looking away from the apparatus, and/or the like. In such an example, the apparatus may receive sensor information indicative of an action that is non-conducive to the user perceiving displayed information. The apparatus may utilize activity determination techniques, whether currently known or developed in the future, to determine the activity based, at least in part, on the sensor information. In at least one example embodiment, causation of entry into the reduced interaction mode is based, at least in part, on determination that the sensor information is indicative of the action being non-conducive to the user perceiving information by way of the display. In at least one example embodiment, upon determining that the sensor information is no longer indicative of an action that is non-conducive to the user perceiving displayed information the apparatus may terminate the reduced interaction mode, similarly as described regarding FIGURE 7.

At block 1202, the apparatus causes display of content information on an apparatus, similarly as described regarding block 502 of FIGURE 5. At block 1204, the apparatus determines that at least one reduced interaction criteria has been satisfied to enter a reduced interaction mode, similarly as described regarding block 504 of FIGURE 5. At block 1206, the apparatus determines that a hand is gripping the apparatus in a manner that is consistent with a use grip, similarly as described regarding block 506 of FIGURE 5. At block 1208, the apparatus causes display of, at least part of, the content information, similarly as described regarding block 508 of FIGURE 5.

At block 1210, the apparatus receives sensor information indicative of an action that is non-conducive to the user perceiving displayed information.

At block 1212, the apparatus causes entry into the reduced interaction mode, similarly as described regarding block 610 of FIGURE 6. In this manner, entry into the reduced interaction mode may be based, at least in part, on the sensor information.

Embodiments of the invention may be implemented in software, hardware, application logic or a combination of software, hardware, and application logic. The software, application logic and/or hardware may reside on the apparatus, a separate device, or a plurality of separate devices. If desired, part of the software, application logic and/or hardware may reside on the apparatus, part of the software, application logic and/or hardware may reside on a separate device, and part of the software, application logic and/or hardware may reside on a plurality of separate devices. In an example embodiment, the application logic, software or an instruction set is maintained on any one of various conventional computer-readable media.

If desired, the different functions discussed herein may be performed in a different order and/or concurrently with each other. For example, block 504 of FIGURE 5 may be performed after block 506. Furthermore, if desired, one or more of the above-described functions may be optional or may be combined. For example, block 606 of FIGURE 6 may be optional and/or combined with block 506 of FIGURE 5.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the above describes example embodiments of the invention, these descriptions should not be viewed in a limiting sense. Rather, there are variations and modifications which may be made without departing from the scope of the present invention as defined in the appended claims.

## Claims

1. A method comprising:
causing display of content information on an apparatus;
determining that at least one reduced interaction criteria has been satisfied to enter a reduced interaction mode;
determining that a hand is gripping the apparatus in a manner that is consistent with a use grip; and
causing display of, at least part of, the content information based, at least in part, on the determination that the hand is gripping the apparatus in a manner that is consistent with the use grip.

2. The method of claim 1, further comprising:
precluding, at least in part, the reduced interaction mode based, at least in part, on the determination that the hand is gripping the apparatus in a manner that is consistent with the use grip.

3. The method of claim 2, wherein the causation of display of information relates to retaining, at least part of, the content information.

4. The method of any of claims 1-3, wherein determination that the hand is gripping the apparatus in a manner that is consistent with the use grip causes preclusion of entry into the reduced interaction mode, and that causation of display of the content information is based, at least in part, on the preclusion.

5. The method of any of claims 1-4, further comprising:
causing display of the content information;
determining that at least one reduced interaction criteria has been satisfied to enter the reduced interaction mode;
determining absence of a hand gripping the apparatus in a manner that is consistent with a use grip;
causing entry into the reduced interaction mode based, at least in part, on the determination that that at least one reduced interaction criteria has been satisfied to enter the reduced interaction mode and determination that the hand is gripping the apparatus in a manner that is consistent with the use grip; and
causing termination of the reduced interaction mode.

6. The method of any of claims 1-5, further comprising:
determining that the hand is no longer gripping the apparatus in a manner that is consistent with a use grip; and
causing entry of the reduced interaction mode based, at least in part, on the determination that the hand is no longer gripping the apparatus in a manner that is consistent with a use grip.

7. The method of any of claims 1-6, wherein the reduced interaction criteria relates to a lack of interactive input for a threshold duration.

8. The method of any of claims 1-7, further comprising receiving information from at least one grip sensor, wherein the determination that the hand is gripping the apparatus in a manner that is consistent with the use grip is based, at least in part, on the information from the grip sensor.

9. The method of any of claims 1-8, wherein the reduced interaction mode relates to a lock mode and further comprising:
entering the lock mode, prior to determination the reduced interaction criteria has been satisfied to enter a reduced interaction mode, wherein causation of display of, at least part of, the content information relates to causing an increase in the amount of content displayed during the lock mode.

10. The method of claim 9, further comprising
detecting movement of the apparatus towards a user's face; and
causing another increase in the amount of content displayed during the lock mode.

11. The method of any of claims 1-10, further comprising:
receiving sensor information indicative of an action that is non-conducive to the user perceiving displayed information; and
causing entry into the reduced interaction mode based, at least in part, on the sensor information.

12. An apparatus comprising means for performing the method of any of the preceding claims.

13. The apparatus of Claim 12, wherein the apparatus comprises a display.

14. The apparatus of any of Claims 12-13, wherein the means for performing the method comprise a processor and a memory comprising computer program code, the memory and the computer program code configured to, working with the processor, cause the apparatus to perform the method of any of claims 1-11.

15. At least one computer readable medium comprising instructions that, when executed, implement a method or realize an apparatus as claimed in any preceding claim.
